# EUROPEAN PATENT APPLICATION

(11) **EP 4 686 154 A1**
(43) Date of publication of application: **28.01.2026**
(21) Application number: 25188729.5
(22) Date of filing: 10.07.2025
(51) Int. Cl.: H04L 9/40

(54) **ENABLING ON-PREMISES SECURITY PER TENANT ON A MULTI-TENANT EDGE DEVICE**

(30) Priority: 23.07.2024 US 202418781720
(71) Applicant: Cisco Technology, Inc., San Jose, CA 95134 (US)
(72) Inventor: DEVENDRACHAR, Ganesh, Milpitas, CA, 95035 (US); GILL, Ajeet Pal Singh, Fremont, CA, 94539 (US); TANGIRALA, Srilatha, San Jose, CA, 95135 (US); TRACY, Michael, Petaluma, CA, 94954 (US)
(74) Representative: Mathys & Squire

(57) **Abstract**

In one embodiment, a method includes onboarding, by an edge router, a first tenant from a network management system and determining, by the edge router, a mapping of a tenant identifier associated with the first tenant to a controller identifier associated with a controller. The method also includes reserving, by the edge router, a port number in a kernel for the first tenant and inserting, by the edge router, the tenant identifier into a first control packet. The method further includes communicating, by the edge router, the first control packet to the controller via an encrypted control connection during a first peering session. The first peering session shares the encrypted control connection with a second peering session.

## Description

### TECHNICAL FIELD

The present technology pertains to multi-tenanted networks, and, more specifically, to applying zone-based firewall configurations with multi-tenanted edge nodes.

### BACKGROUND

Multi-tenancy is a concept that refers to the logical isolation of shared virtual compute, storage, and/or network resources. In a multi-tenancy mode of operation, multiple independent instances (e.g., Layer-3 virtual routing and forwarding instances (VRFs) or Layer-2 virtual local area network instances (VLANs)) of a tenant (e.g., a business entity, a user group, applications, security, etc.) operate in a shared environment while ensuring logical segmentation between the instances. Service providers may use multi-tenancy to achieve effective utilization of network components.

Zone-based firewalls (ZBF) are a sophisticated approach to network security that segment a network into different zones, each representing a distinct segment with specific security requirements. In a multi-tenanted network environment, where multiple tenants or users share the same infrastructure, ZBFs provide a robust mechanism for isolating traffic between these tenants. By creating distinct security zones for each tenant, ZBFs enforce strict policies on traffic flow, ensuring that data from one tenant does not inadvertently or maliciously reach another. This isolation not only enhances security but also simplifies the management of policies, as administrators can tailor rules to the specific needs and risk profiles of each zone.

In addition to improving security, zone-based firewalls in multi-tenanted networks offer enhanced scalability and flexibility. As new tenants are onboarded or existing ones expand, administrators can easily create new zones or modify existing ones without disrupting the entire network. This modular approach facilitates the implementation of customized security policies that reflect the varying needs of different tenants. Furthermore, ZBFs provide detailed logging and monitoring capabilities, enabling administrators to track and analyze traffic patterns within and between zones. This visibility is crucial for detecting and responding to potential security incidents, ensuring that the multi-tenanted environment remains secure and compliant with relevant regulations.

### BRIEF DESCRIPTION OF THE DRAWINGS

Details of one or more aspects of the subject matter described in this disclosure are set forth in the accompanying drawings and the description below. However, the accompanying drawings illustrate only some typical aspects of this disclosure and are therefore not to be considered limiting of its scope. Other features, aspects, and advantages will become apparent from the description, the drawings and the claims.
FIG. 1 illustrates an example of a high-level network architecture of an SD-WAN network according to some aspects of the present disclosure.
FIG. 2 illustrates an example of a high-level diagram illustrating a tenant on a network according to some aspects of the present disclosure.
FIG. 3 illustrates a method for applying zone-based firewall configurations to traffic of multiple tenants connected through a single edge router according to some aspects of the present disclosure.
FIG. 4 illustrates a method for applying zone-based firewall configurations to traffic of multiple tenants connected through a single edge router, in accordance with some aspects of the present disclosure.
FIG. 5 shows an example of a system for implementing certain aspects of the present technology.

### DETAILED DESCRIPTION

Aspects of the invention are set out in the independent claims and preferred features are set out in the dependent claims. Features of one aspect may be applied to each aspect alone or in combination with other features.

Various embodiments of the disclosure are discussed in detail below. While specific implementations are discussed, it should be understood that this is done for illustration purposes only. A person skilled in the relevant art will recognize that other components and configurations may be used without parting from the spirit and scope of the disclosure. Thus, the following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be references to the same embodiment or any embodiment; and such references mean at least one of the embodiments.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

A used herein the term "configured" shall be considered to interchangeably be used to refer to configured and configurable, unless the term "configurable" is explicitly used to distinguish from "configured". The proper understanding of the term will be apparent to persons of ordinary skill in the art in the context in which the term is used.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. In some cases, synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any example term. Likewise, the disclosure is not limited to various embodiments given in this specification.

Without intent to limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Aspects of the present disclosure can be implemented in any device, system or network that is capable of transmitting and receiving radio frequency (RF) signals according to one or more of the Institute of Electrical and Electronics Engineers (IEEE) 802.11 standards, the IEEE 802.15 standards, the Bluetooth^{®} standards as defined by the Bluetooth Special Interest Group (SIG), or the Long Term Evolution (LTE), 3G, 4G or 5G (New Radio (NR)) standards promulgated by the 3rd Generation Partnership Project (3GPP), among others. The described implementations can be implemented in any device, system or network that is capable of transmitting and receiving RF signals according to one or more of the following technologies or techniques: code division multiple access (CDMA), time division multiple access (TDMA), frequency division multiple access (FDMA), orthogonal FDMA (OFDMA), single-carrier FDMA (SC-FDMA), single-user (SU) multiple-input multiple-output (MIMO) and multi-user (MU) MIMO. The described implementations also can be implemented using other wireless communication protocols or RF signals suitable for use in one or more of a wireless personal area network (WPAN), a wireless local area network (WLAN), a wireless wide area network (WWAN), or an internet of things (IOT) network.

### OVERVIEW

In an aspect, a computer-implemented method for applying zone-based firewall configurations to traffic of multiple tenants connected through a single edge router may include maintaining, by a multi-tenant router, a virtual private network (VPN) map, where the VPN map includes first tenant and associated tenant VPN ID(s) and a second tenant and associated VPN ID(s). The multi-tenant router may store at least a first zone-based firewall configuration for the first tenant and at least a second zone-based firewall configuration for the second tenant and receive a traffic flow over a VPN. The VPN may be present in the VPN map. The multi-tenant router may also determine whether to apply the first zone-based firewall configuration or the second zone-based firewall configuration to the traffic flow depending on a combination of the VPN ID and tenant. The multi-tenant router may then apply the zone-based firewall configuration for the determined VPN ID and tenant.

In another aspect, the first tenant and the second tenant have at least one overlapping VPN ID. In another aspect, the multi-tenant router does not utilize containers or namespaces to isolate tenants. In another aspect, the computer implemented method may also include generating, by the multi-tenant router, a unique local identifier for entries of the VPN map on the multi-tenant router, the local identifier being associated with respective tenant and VPN ID combinations. In another aspect, the method may also include receiving, by the multi-tenant router, an instruction to host a first virtual routing and forwarding (VRF) instance for a particular tenant and VPN ID combination. The multi-tenant router may also record the first VRF instance hosted by the multi-tenant router in the VPN map maintained by the multi-tenant router.

In another aspect, the first zone-based firewall configuration maps firewall policy to a traffic flow originating in a first source zone with a destination in a first destination zone. In another aspect, the computer implemented method may also include configuring each VPN ID with a traffic limit during onboarding based on the one or more zone configurations. In another aspect, the computer implemented method may also include learning, through overlay routing protocol (OMP) via one or more other multi-tenant routers on the multi-tenant network. The multi-tenant router may also route information aligning with the empty entries that are not hosted by the multi-tenant router.

In another aspect, the controller is a software-defined wide area network (SDWAN) controller. In another aspect, the zone configurations include one or more zone pairs.

In another aspect, the computer implemented method may also include learning, at the multi-tenant router, a second VRF instance associated with a tenant and VPN ID combination, where the second VRF is not hosted by the multi-tenant router. The multi-tenant router may assign a second local identifier to the tenant and VPN ID combination, and store the tenant and VPN ID combination and the second local identifier for the second VRF in the VPN map on the multi-tenant router.

In another aspect, determining whether to apply the first zone-based firewall configuration or the second zone-based firewall configuration to the traffic flow depending on a combination of the VPN ID and tenant may further include looking up, by the multi-tenant router, the local identifier corresponding to the combination of the VPN ID and tenant for the destination of the traffic flow. The multi-tenant router may also map the local identifier to the destination zone, whereby the multi-tenant router can apply the zone-based firewall configuration for the determined VPN ID and tenant that maps to the local identifier.

In another aspect, determining whether to apply the first zone-based firewall configuration or the second zone-based firewall configuration to the traffic flow depending on a combination of the VPN ID and tenant may further include looking up, by the multi-tenant router, the local identifier corresponding to the combination of the VPN ID and tenant for the source of the traffic flow. The multi-tenant router may also map the local identifier to the source zone, whereby the multi-tenant router can apply the zone-based firewall configuration for the determined VPN ID and tenant that maps to the local identifier.

In another aspect, determining whether to apply the first zone-based firewall configuration or the second zone-based firewall configuration to the traffic flow depending on a combination of the VPN ID and tenant may further include looking up, by the multi-tenant router, the local identifier corresponding to the VRF of the destination of the traffic flow. The multi-tenant router may map the local identifier to the destination zone, whereby the multi-tenant router can apply the zone-based firewall configuration for the determined VPN ID and tenant that maps to the local identifier.

In another aspect, determining whether to apply the first zone-based firewall configuration or the second zone-based firewall configuration to the traffic flow depending on a combination of the VPN ID and tenant further includes looking up, by the multi-tenant router, the local identifier corresponding to the VRF of the source of the traffic flow. The multi-tenant router may also map the local identifier to the source zone, whereby the multi-tenant router can apply the zone-based firewall configuration for the determined VPN ID and tenant that maps to the local identifier.

In another aspect, the traffic limit includes at least one of a maximum number of sessions or maximum number of half sessions. Other technical features may be readily apparent to one skilled in the art from the following figures, descriptions, and claims.

Systems and apparatus comprising means for implementing the methods described herein, including network nodes, computer programs, computer program products, computer readable media and logic encoded on tangible media for implementing the methods are also described.

### EXAMPLE EMBODIMENTS

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

The disclosed technology addresses the need in the art for implementing a zone-based firewall on a multi-tenanted network. In some examples, firewalls are applied using a tenant's VPNs (e.g., VPN 10, VPN 20, and VPN 30). However, since the network is multi-tenanted, a multi-tenanted edge node (e.g., a router) may not be able to universally apply a firewall to the intended traffic if a second tenant is associated with a VPN with the same identifier (e.g., the second tenant also has a VPN 10). Generating VRF for VPN IDs may provide a temporary solution to the firewall implementation issue, but may not necessarily work in a scenario where the destination VPN is not hosted at an edge router of the source VPN. Additionally, containers and/or namespaces may be used to segregate VPNs with overlapping names, however this adds large amounts of overhead and expense to the network setup.

For example, on a network, a VPN may be configured at a particular edge device and then may continue to be hosted at the particular edge device. Tenant B may be a tenant of the network. Tenant B VPN 30 may be present at a first edge node and Tenant B VPN 10 and 20 may be present at a second edge node. As such, not all VPNs associated with Tenant B are present on all edge routers throughout the network. Additionally, other tenants (e.g., Tenant A), may also be hosted on the particular edge device and may be associated with a VPN of the same VPN ID (e.g., Tenant A is also associated with a VPN 30). If Tenant B intends to implement a firewall configuration for traffic between different VPNs accessible over the network (e.g., traffic from VPN 30 to VPN 10, such as traffic from headquarters of an enterprise to an individual franchise of the enterprise), it may be complex due to the discrepancy in VPN presence (e.g., VPN 30 on the first edge node and VPN 10 on the second edge node) and the overlapping VPN IDs. In this scenario, VPN 30, the source zone, can be identified since the source VPN is local and can be uniquely translated to a VRF. However, the destination zone (VPN 10) cannot be uniquely translated to a VRF because Tenant B does not have VPN 10 present on the first edge node, and similarly, VPN 30 is not present on the second edge node.

By introducing the concept of a local identifier, a network may be able to implement zone firewall configurations with multiple tenants. In some examples, an edge node may generate a local identifier upon configuration of a VPN on the edge node. In some other examples, the edge node may learn the local identifier using overlay routing protocol (OMP) or another method (e.g., route leaking). The local identifier is used to identify applicable zones and therefore, zone-based security measures.

The detailed description set forth below is intended as a description of various configurations of embodiments and is not intended to represent the only configurations in which the subject matter of this disclosure can be practiced. The appended drawings are incorporated herein and constitute a part of the detailed description. The detailed description includes specific details for the purpose of providing a more thorough understanding of the subject matter of this disclosure. However, it will be clear and apparent that the subject matter of this disclosure is not limited to the specific details set forth herein and may be practiced without these details. In some instances, structures and components are shown in block diagram form in order to avoid obscuring the concepts of the subject matter of this disclosure.

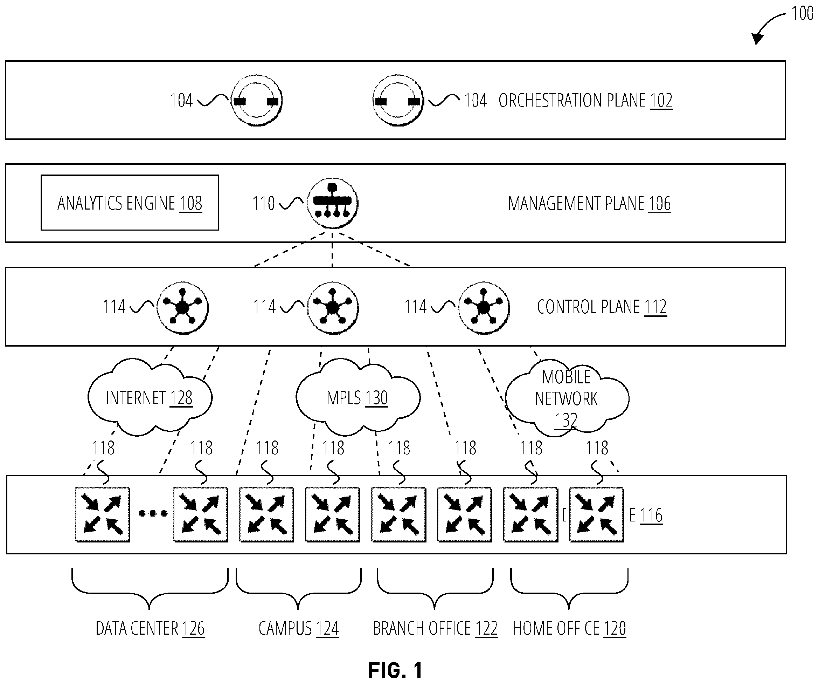

FIG. 1 illustrates an example of a network architecture 100 for implementing aspects of the present technology. An example of an implementation of the network architecture 100 is the Cisco^{®} SD-WAN architecture. However, one of ordinary skill in the art will understand that, for the network architecture 100 and any other system discussed in the present disclosure, there can be additional or fewer component in similar or alternative configurations. The illustrations and examples provided in the present disclosure are for conciseness and clarity. Other embodiments may include different numbers and/or types of elements but one of ordinary skill the art will appreciate that such variations do not depart from the scope of the present disclosure.

In this example, the network architecture 100 can comprise an orchestration plane 102, a management plane 106, a control plane 112, and a data plane 116. The orchestration plane 102 can assist in the automatic on-boarding of edge network devices 118 (e.g., switches, routers, etc.) in an overlay network. The orchestration plane 102 can include one or more physical or virtual network orchestrator appliances 104. The network orchestrator appliances 104 can perform the initial authentication of the edge network devices 118 and orchestrate connectivity between devices of the control plane 112 and the data plane 116. In some embodiments, the network orchestrator appliances 104 can also enable communication of devices located behind Network Address Translation (NAT). In some embodiments, physical or virtual Cisco^{®} SD-WAN vBond appliances can operate as the network orchestrator appliances 104.

The management plane 106 can be responsible for central configuration and monitoring of a network. The management plane 106 can include one or more physical or virtual network management appliances 110. In some examples, the management plane 106 may include analytics engine 108, which may provide analyze, monitor, and optimize network performance and operations. In some embodiments, the network management appliances 110 can provide centralized management of the network via a graphical user interface to enable a user to monitor, configure, and maintain the edge network devices 118 and links (e.g., internet transport network 128, MPLS network 130, 4G/Mobile network 132) in an underlay and overlay network. The network management appliances 110 can support multi-tenancy and enable centralized management of logically isolated networks associated with different entities (e.g., enterprises, divisions within enterprises, groups within divisions, etc.). Alternatively or in addition, the network management appliances 110 can be a dedicated network management system for a single entity. In some embodiments, physical or virtual Cisco^{®} SD-WAN vManage appliances can operate as the network management appliances 110.

The control plane 112 can build and maintain a network topology and make decisions on where traffic flows. The control plane 112 can include one or more physical or virtual controllers 114. The controllers 114 can establish secure connections to each edge network device 118 and distribute route and policy information via a control plane protocol (e.g., Overlay Management Protocol (OMP) (discussed in further detail below), Open Shortest Path First (OSPF), Intermediate System to Intermediate System (IS-IS), Border Gateway Protocol (BGP), Protocol-Independent Multicast (PIM), Internet Group Management Protocol (IGMP), Internet Control Message Protocol (ICMP), Address Resolution Protocol (ARP), Bidirectional Forwarding Detection (BFD), Link Aggregation Control Protocol (LACP), etc.). In some embodiments, the controllers 114 can operate as route reflectors. The controllers 114 can also orchestrate secure connectivity in the data plane 116 between and among the edge network devices 118. For example, in some embodiments, the controllers 114 can distribute crypto key information among the edge network devices 118. This can allow the network to support a secure network protocol or application (e.g., Internet Protocol Security (IPSec), Transport Layer Security (TLS), Secure Shell (SSH), etc.) without Internet Key Exchange (IKE) and enable scalability of the network. In some embodiments, physical or virtual Cisco^{®} SD-WAN vSmart controllers can operate as the controllers 114.

The data plane 116 can be responsible for forwarding packets based on decisions from the control plane 112. The data plane 116 can include the edge network devices 118, which can be physical or virtual edge network devices. The edge network devices 118 can operate at the edges various network environments of an organization, such as in one or more data centers 126, campus networks 124, branch office networks 122, home office networks 120, and so forth, or in the cloud (e.g., Infrastructure as a Service (IaaS), Platform as a Service (PaaS), SaaS, and other cloud service provider networks). The edge network devices 118 can provide secure data plane connectivity among sites over one or more WAN transports, such as via one or more internet transport networks 128 (e.g., Digital Subscriber Line (DSL), cable, etc.), MPLS networks 130 (or other private packet-switched network (e.g., Metro Ethernet, Frame Relay, Asynchronous Transfer Mode (ATM), etc.), mobile networks 132 (e.g., 3G, 4G/LTE, 5G, etc.), or other WAN technology (e.g., Synchronous Optical Networking (SONET), Synchronous Digital Hierarchy (SDH), Dense Wavelength Division Multiplexing (DWDM), or other fiber-optic technology; leased lines (e.g., T1/E1, T3/E3, etc.); Public Switched Telephone Network (PSTN), Integrated Services Digital Network (ISDN), or other private circuit-switched network; small aperture terminal (VSAT) or other satellite network; etc.). The edge network devices 118 can be responsible for traffic forwarding, security, encryption, quality of service (QoS), and routing (e.g., BGP, OSPF, etc.), among other tasks. In some embodiments, physical or virtual Cisco^{®} SD-WAN vEdge routers can operate as the edge network devices 118.

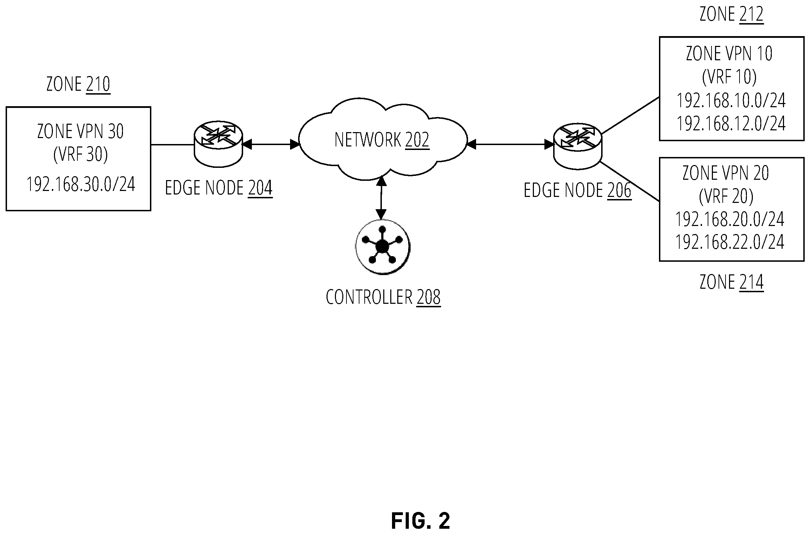

FIG. 2 illustrates an example diagram demonstrating the application of zone-based firewall configurations to traffic of multiple tenants connected through a single edge router according to some aspects of the present disclosure. Network 202 of FIG. 2 is any type of network that facilitates communication between components of FIG. 2. Network 202 may connect one or more components of FIG. 2. One or more portions of network 202 may include an ad-hoc network, the Internet, an intranet, an extranet, a virtual private network (VPN), an Ethernet VPN (EVPN), a LAN, a wireless LAN (WLAN), a VLAN, a wide area network (WAN), a wireless WAN (WWAN), an SD-WAN, a metropolitan area network (MAN), a portion of the Public Switched Telephone Network (PSTN), a cellular telephone network, a Digital Subscriber Line (DSL), an Multiprotocol Label Switching (MPLS) network, a 3G/4G/5G network, a Long Term Evolution (LTE) network, a cloud network, a combination of two or more of these, or other suitable types of networks. Network 202 may include one or more different types of networks. Network 202 may be any communications network, such as a private network, a public network, a connection through the Internet, a mobile network, a WI-FI network, etc. Network 202 may include a core network, an access network of a service provider, an Internet service provider (ISP) network, and the like. One or more components of FIG. 2 may communicate over network 202. In the illustrated embodiment of FIG. 2, network 202 is an SD-WAN, as described in FIG. 1.

Network 202 may include one or more nodes. Nodes are connection points within network 202 that receive, create, store and/or send data along a path. Nodes may include one or more redistribution points that recognize, process, and forward data to other nodes of network. Nodes may include virtual and/or physical nodes. Nodes may include one or more virtual machines, hardware devices, bare metal servers, and the like. As another example, nodes may include data communications equipment such as computers, routers, servers, printers, workstations, switches, bridges, modems, hubs, and the like. In certain embodiments, nodes use static and/or dynamic routing to send data to and/or receive data to other nodes of FIG. 2. In the illustrated embodiment of FIG. 2, nodes include controller 114, edge node 204, and edge node 206.

Controller 208 of network 202 monitors, operates, manages, troubleshoots, and/or maintains services related to network 202 In certain embodiments, controller 208 is a centralized controller that oversees the control plane of network 202. Controller 208 may manage provisioning, maintenance, and/or security for network 202. In some embodiments, controller 208 is primarily involved in control plane communication and does not handle data traffic. However, controller 208 may control the flow of data traffic throughout network 202. In certain embodiments, controller 208 may authenticate edge node 204 as edge node 204 joins network 202.

Edge node 204 and 206 of FIG. 2 are connection points within network 202 that receive, create, store, and/or communicate data along a path. Edge node 204 and 206 provide one or more interfaces for communicating with other nodes of network 202. In certain embodiments, edge node 204 and 206 are single devices for connecting and/or securing enterprise traffic to the cloud. Edge node 204 and 206 may include one or more hardware devices, software (e.g., a cloud router) that runs as a virtual machine, and the like. In some embodiments, edge node 204 and 206 handle the transmission of data traffic. In certain embodiments, edge node 204 and 206 onboards one or more tenants of network 202. For example, edge node 204 may be configured to define the infrastructure boundaries and/or resource limits that are applied automatically when a user makes a service request to provision one or more tenants.

In certain embodiments, an administrator of network 202 may create tenants in a centralized network management system of network 202. Tenants may be logical containers for application policies and may be associated with a particular client, entity, location, enterprise, building, department, any combination thereof, or the like. Tenants may allow administrators to exercise domain-based access control and may be units of isolation from a policy perspective. In some examples, tenants may represent customers in a service provider setting, organizations or domains in an enterprise setting, groups of policies, and the like.

In some embodiments, edge node 204 and/or edge node 206 may maintain and/or reference a VPN map for the tenants of network 202. The VPN map may be generated by the edge nodes, controller 208, an administrator of network 202, another component of network 202, any combination thereof, or the like. VPN map may be a JavaScript Object Notation (JSON) map, a YAML map, and the like. The VPN map may include one or more tenants, tenant identifiers, labels associated with particular VPN instances of a tenant, associated VPNs, addresses, etc. For example, the VPN map may include data such as the following table:

**Table 1. Example VPN map**

| **Tenant** | **VPN ID** | **Device VPN/IOS VRF** |
|---|---|---|
| A | 10 | 1 |
| B | 10 | 2 |
| B | 20 | 3 |
| B | 30 | 4 |
| C | 10 | 5 |
| C | 20 | 6 |

As shown in the table above, Tenant A may be associated with one VPN, Tenant B may be associated with three VPNs, and Tenant C may be associated with two VPNs. Additionally, a VPN may be associated with a respective virtual routing function (VRF) to maintain differentiation and security between VPNs (e.g., there are three instances of a VPN ID with "10" as the identifier). VRF is a technology that allows multiple instances of a routing table to coexist within the same router (e.g., edge node 204 or edge node 206) at the same time. In certain embodiments, each VRF is a unique Layer 3 forwarding and application policy domain. Each VRF may define a Layer 3 address domain. In certain embodiments, edge node 204 and/or edge node 206 may configure, onboard, and/or assign one or more VRFs, such as the VRFs shown in Table 1 above. Each VRF may be associated with one or more bridge domains. As shown in Table 1, allocating a VRF to the VPN IDs maintains the separation between the VPNs (e.g., maintaining security policy implementation when the VPN ID identifier is the same). For example, VPN ID 20 associated with Tenant B and VPN ID 20 associated with Tenant C are associated with VRF 3 and VRF 6, respectively. One or more VRFs may be associated with a different department (e.g., finance, engineering, sales, human resources, marketing, etc.).

FIG. 2 illustrates an example network that applies to the network configuration of Tenant B, shown in Table 1 above. On a network, such as network 202, a VPN may be configured at a particular edge device and then may continue to be hosted at the particular edge device. For example, VPN ID 30 may be present at edge node 204 and VPN ID 10 and 20 may be present at edge node 206. As such, not all VPNs associated with Tenant B are present on all edge routers throughout network 202. Additionally, the VPN IDs included on network 202 may also be configured into zones. For example, VPN ID 30 may be associated with zone 210, VPN ID 20 may be associated with zone 214, and VPN ID 10 may be associated with zone 212. If Tenant B intends to implement a firewall configuration for traffic between different VPNs accessible over network 202 (e.g., traffic from VPN 30 to VPN 10, such as traffic from headquarters of an enterprise to an individual franchise of the enterprise), it may be complex due to the discrepancy in VPN presence (e.g., VPN 30 on edge node 204 and VPN 10 on edge node 206). In this scenario, VPN 30, the source zone, can be identified since the source VPN is local and can be uniquely translated to VRF 4. However, the destination zone (VPN 10) cannot be uniquely translated to a VRF because Tenant B does not have VPN 10 present on edge node 204, and similarly, VPN 30 is not present on edge node 206.

To ensure that VPN 30 is mapped on edge node 206 and VPN 10 and 20 are mapped on edge node 204, an edge node (e.g., edge node 204 and/or edge node 206) may generate one or more local identifiers associated with the VPN IDs. The local identifiers may be generated for every VPN ID learned by the edge node, even if the VPN ID is not configured locally. In some examples, the controller may generate the local identifier and/or instruct the edge nodes to generate the local identifier. Local identifier allocation may be initiated upon the configuration of the VPN ID on an edge node (e.g., when controller 208 initiates the generation of an associated VRF).

**Table 2. Example VPN map for Edge node 204**

| **Tenant** | **VPN ID** | **Device VPN/IOS VRF** | **Local identifier** |
|---|---|---|---|
| A | 10 | 1 | 1 |
| B | 10 | Not hosted | 2 |
| B | 20 | Not hosted | 3 |
| B | 30 | 3 | 4 |
| C | 10 | 4 | 5 |
| C | 20 | Not hosted | 6 |

In some other examples, the VPN ID may be allocated when the VPN ID is learned via overlay management protocol (OMP) or "route leaking." In network 202, OMP facilitates efficient management of virtual routing domains. OMP enables the controlled exchange of routing information and policies between network components, such as edge routers (e.g., edge node 204 and edge node 206) and centralized controllers (e.g., controller 208), ensuring seamless integration of diverse network paths and services. Specifically, OMP supports advanced features like route leaking, which selectively shares routes between different virtual routing and forwarding instances, enhancing network flexibility and performance optimization. This innovation in network management is crucial for optimizing traffic routing, ensuring secure connectivity, and adapting dynamically to varying network conditions. For example, within Table 2, VPN 10 and VPN 20 of Tenant B were not created on edge node 204, and are therefore "not hosted," but edge node 204 may still route traffic and implement security measures by learning associated local identifiers for VPN 10 and VPN 20.

Local identifiers may also be compatible with single tenant devices, not solely multi-tenant devices. For example, local identifiers may be treated similarly as VPN IDs on single tenant devices. A VPN ID uniquely distinguishes each VPN instance on a single-tenant router, ensuring proper traffic segregation and management. It enables the application of specific routing policies and configurations, facilitating secure and efficient network operations.

In some examples, a learned route (e.g., a VPN ID/VRF/local identifier learned from a remote edge router) points to a label received from the remote edge router, therefore there is no update required in forwarding code. Only the VRF to local identifier mapping may be updated to forwarding code. This may be used by any feature to perform lookups.

Using local identifier, VRF, VPN ID, any combination thereof, or the like, network 202 may implement firewall zones. Zone-based firewalls segment a network into different zones, each representing a distinct security level, such as internal, external, and demilitarized zones (DMZ). They enforce security policies based on the source and destination zones of the traffic, allowing or denying traffic according to predefined rules. This approach enhances network security by providing granular control over traffic flows and ensuring that interactions between different network segments adhere to strict security guidelines. In some examples, the firewall zones may include zone pairs, which define the traffic flow and security policies between two network zones, specifying which types of traffic are allowed, denied, or inspected between the source and destination zones. The code configuration in zone-based firewalls configure the zones using VPN IDs (e.g., VPN ID 10, etc.), makes a lookup call for a corresponding local identifier (e.g., "2," etc.), and programs in the VPN-to-zone mapping with the local identifier.

As shown in FIG. 2, a router, such as edge node 204 and/or edge node 206, may receive traffic from a source, such as 192.168.30.0/24. The source VPN (e.g., VPN 30) may be associated with a VRF within the network. Upon receipt of the traffic, the router may identify if the associated VRF is hosted on the router. For example, edge node 204 may identify that VPN 30 is hosted edge node 204, and thus, the VRF is known. In this example, edge node 204 may use the known VRF to identify a corresponding local identifier for the source of the traffic. However, in some examples, the associated VRF may not be known. In such examples, the router may identify the local identifier using the tenant name and the VPN ID. In some examples, the local identifier may be used to identify the unknown VRF. For example, the VPN ID may be VPN 30 and the tenant may be Tenant B. Since the VRF is known and hosted on edge node 204, edge node 204 may look up the local identifier locally on the device.

Using the local identifier associated with the source VPN (e.g., VPN 30), the router (e.g., edge node 204) may identify a corresponding zone associated with the source (i.e., a source zone). The source zone may be included in a zone-based firewall configuration associated with the tenant (e.g., Tenant B). In some examples, the source zone may be included in a zone pair (e.g., traffic from Zone A to Zone E receives Security Policy A, etc.). For example, edge node 204 may map VPN 30 to a source zone.

Similar to the identification of the source zone, the router may identify a destination zone using a similar process. A router, such as edge node 204 and/or edge node 206, may receive traffic directed to a destination, such as 192.168.10.0/24. The destination VPN (VPN 10) may be associated with a VRF within the network. Upon receipt of the traffic, the router may identify if the associated VRF is hosted on the router. Since VPN 10 is not hosted on edge node 204, the edge node 204 may identify the local identifier using the tenant name and the VPN ID. In some examples, the local identifier may be used to identify the unknown VRF. For example, the VPN ID may be VPN 10 and the tenant may be Tenant B. Using the VPN ID and the tenant name, edge node 204 may receive data pertaining to the VRF and/or the local identifier using OMP, route leaking, or another method of receiving data from other edge nodes associated with the network. Using the local identifier associated with the destination VPN (e.g., VPN 10), the router (e.g., edge node 204) may identify a corresponding zone associated with the destination (i.e., a destination zone). The destination zone may be included in a zone-based firewall configuration associated with the tenant (e.g., Tenant B). For example, edge node 204 may map VPN 10 to a destination zone.

In some embodiments, network 202 and/or controller 208 may implement session limits applicable to one or more tenants associated with network 202. Due to the universal applicability of the local identifier, these session limits may be enforced through all devices on network 202. While a tenant is onboarded, the tenant may be configured, at an edge node (e.g., edge node 204 and/or edge node 206), with a maximum number of sessions and/or half sessions. The firewall code may count the sessions for tenants and enforce the limitations. The maximum number of sessions and/or half sessions enforces the fairness in usage of a firewall by tenants.

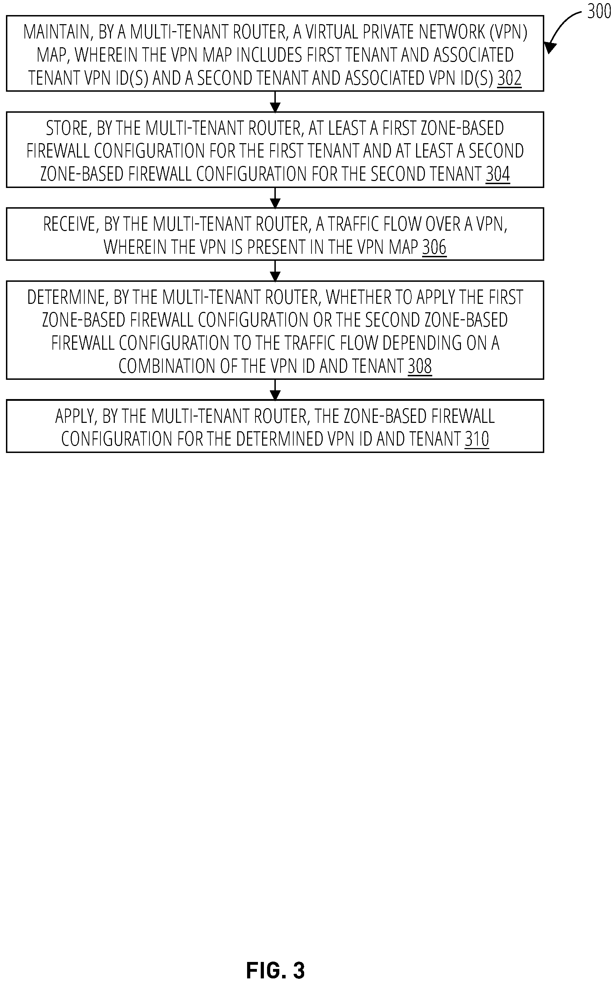

FIG. 3 illustrates a method 300 for applying zone-based firewall configurations to traffic of multiple tenants connected through a single edge router according to some aspects of the present disclosure. Although the example method 300 depicts a particular sequence of operations, the sequence may be altered without departing from the scope of the present disclosure. For example, some of the operations depicted may be performed in parallel or in a different sequence that does not materially affect the function of the method 300. In other examples, different components of an example device or system that implements the method 300 may perform functions at substantially the same time or in a specific sequence. The following functions may be performed on a multi-tenanted network associated with a controller. The controller may be a software-defined wide area network (SDWAN) controller.

According to some examples, the method includes maintaining, by a multi-tenant router, a virtual private network (VPN) map, wherein the VPN map includes first tenant and associated tenant VPN ID(s) and a second tenant and associated VPN ID(s) at block 302. For example, the edge node 204 illustrated in FIG. 2 may maintain a virtual private network (VPN) map (e.g., Table 2 described in FIG. 2), wherein the VPN map includes first tenant (e.g., Tenant B, as seen in Table 2) and associated tenant VPN ID(s) and a second tenant (e.g., Tenant A, as seen in Table 2) and associated VPN ID(s). In some examples, the first tenant and the second tenant may have at least one overlapping VPN ID. For example, as shown in Table 2, Tenant A and Tenant B may both be associated with a "VPN 10."

The multi-tenant router may generate a unique local identifier for entries of the VPN map that were configured on the multi-tenant router. The local identifier may be associated with respective tenant and VPN ID combinations. For example, Tenant A VPN 10 may be associated with local identifier "1," and Tenant B VPN 10 may be associated with local identifier "2." Thus, the two VPNs with identical names may be distinguished without using containers, namespaces, or another method of isolating tenants.

When a traffic flow is received by the multi-tenant router (e.g., edge node 204), the multi-tenant router may need to identify appropriate zones for a source VPN and a destination VPN. The zones may be defined according to local identifiers. In some examples, the zones may be identified by local identifiers and at least one of VRFs, tenant names, VPN IDs, any combination thereof, or the like. The local identifiers may be learned by the multi-tenant router through configurations or a learning protocol (e.g., route leaking, OMP, etc.)
To learn local identifiers via configurations, the multi-tenant router may receive an instruction to host a first virtual routing and forwarding (VRF) instance for a particular tenant and VPN ID combination. The multi-tenant router may record the first VRF instance hosted by the multi-tenant router in the VPN map maintained by the multi-tenant router. The multi-tenant router may generate a first local identifier associated with the first VRF instance and may also record the first local identifier in the VPN map. In following transmissions associated with the first VRF instance, the multi-tenant router may look up the corresponding first local identifier locally. This may be performed if the VPN ID associated with the first VRF instance is a source or destination. For example, the multi-tenant router may look up the local identifier corresponding to the VRF of the destination of the traffic flow if the destination is hosted on the multi-tenant router. The multi-tenant router may also look up the local identifier corresponding to the VRF of the source of the traffic flow if the source is hosted on the multi-tenant router.

To learn local identifiers via a learning protocol, the multi-tenant router may need to look up (e.g., via OMP, route leaking, or another form of data transmission between nodes) the local identifier corresponding to the combination of the VPN ID and tenant for the source and/or destination of the traffic flow. In some examples, VPNs may be configured on a second multi-tenant router (e.g., edge node 206) and learned by the multi-tenant router and added as entries of the VPN map. The added entries may be associated with one or more empty entries (e.g., empty entries associated with a corresponding VRF, the local identifier, etc.), due to the added entries not being hosted on the multi-tenant router. When traffic is received that is associated with a VPN ID and tenant combination that is associated with an empty entry, the multi-tenant router may look up the local identifier and/or VRF. For example, the multi-tenant router may look up the local identifier and/or the VRF corresponding to the combination of the VPN ID and tenant for the destination of the traffic flow if the destination is not hosted on the multi-tenant router. The multi-tenant router may also look up the local identifier and/or the VRF corresponding to the combination of the VPN ID and tenant for the source of the traffic flow if the source is not hosted on the multi-tenant router. The multi-tenant router may learn the not-hosted local identifier and/or VRF instance and may update the VPN map. In some examples, the multi-tenant router may assign a local identifier to the not-hosted VPN ID and tenant combination.

The multi-tenant router, after identifying the source local identifier, may map the local identifier to the source zone, whereby the multi-tenant router can apply the zone-based firewall configuration for the determined VPN ID and tenant that maps to the local identifier. Similarly, the multi-tenant router, after identifying the destination local identifier, may map the local identifier to the destination zone, whereby the multi-tenant router can apply the zone-based firewall configuration for the determined VPN ID and tenant that maps to the local identifier.

According to some examples, the method includes storing, by the multi-tenant router, at least a first zone-based firewall configuration for the first tenant and at least a second zone-based firewall configuration for the second tenant at block 304. For example, the edge node 204 illustrated in FIG. 2 may store, by the multi-tenant router, at least a first zone-based firewall configuration for Tenant B and at least a second zone-based firewall configuration for Tenant A. In some examples, the first zone-based firewall configuration maps firewall policy to a traffic flow originating in a first source zone with a destination in a first destination zone. The first source zone and the first destination zone may be associated with the same or different tenants, VPNs, security policies, VRF instances, any combination thereof, or the like. This may include one or more zone pairs. In some examples, in addition to a security policy associated with a particular zone, a VPN ID may be configured with a traffic limit during onboarding based on the one or more zone configurations. The traffic limit may include at least one of a maximum number of sessions or maximum number of half sessions. In some examples, the first tenant and the second tenant may be the same. However, in some other examples, the first tenant and the second tenant may be different.

According to some examples, the method includes receiving, by the multi-tenant router, a traffic flow over a VPN, wherein the VPN is present in the VPN map at block 306. For example, the edge node 204 illustrated in FIG. 2 may receive a traffic flow over a VPN (e.g., VPN 30 of Tenant B), wherein the VPN is present in the VPN map.

According to some examples, the method includes determining, by the multi-tenant router, whether to apply the first zone-based firewall configuration or the second zone-based firewall configuration to the traffic flow depending on a combination of the VPN ID and tenant at block 308. For example, the edge node 204 illustrated in FIG. 2 may determine whether to apply the first zone-based firewall configuration or the second zone-based firewall configuration to the traffic flow depending on a combination of the VPN ID and tenant (e.g., VPN 30 of Tenant B).

According to some examples, the method includes applying, by the multi-tenant router, the zone-based firewall configuration for the determined VPN ID and tenant at block 310. For example, the edge node 204 illustrated in FIG. 2 may apply, by the multi-tenant router, the zone-based firewall configuration for the determined VPN ID and tenant (e.g., VPN 30 of Tenant B).

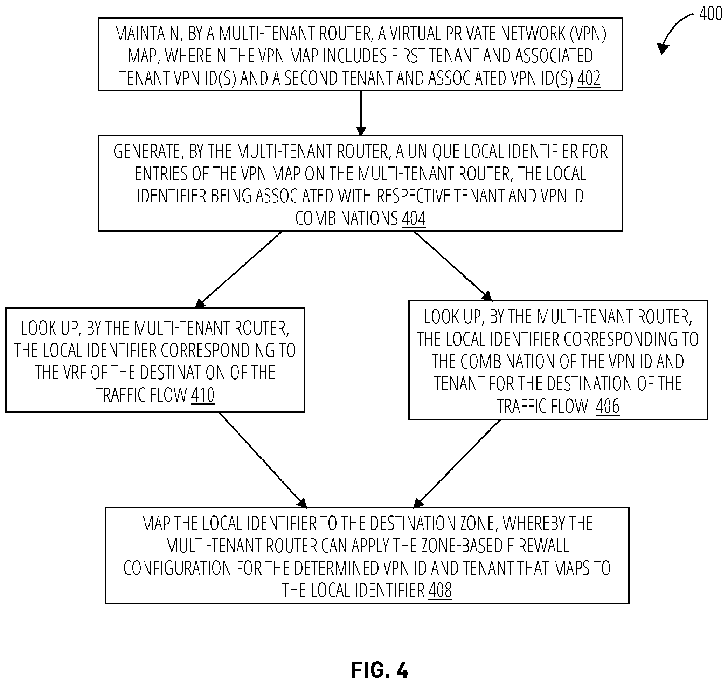

FIG. 4 illustrates a method 400 for applying zone-based firewall configurations to traffic of multiple tenants connected through a single edge router according to some aspects of the present disclosure. Although the example method 400 depicts a particular sequence of operations, the sequence may be altered without departing from the scope of the present disclosure. For example, some of the operations depicted may be performed in parallel or in a different sequence that does not materially affect the function of the method 400. In other examples, different components of an example device or system that implements the method may perform functions at substantially the same time or in a specific sequence.

According to some examples, the method includes maintaining, by a multi-tenant router, a virtual private network (VPN) map, wherein the VPN map includes first tenant and associated tenant VPN ID(s) and a second tenant and associated VPN ID(s) at block 402. For example, the edge node 204 illustrated in FIG. 2 may maintain a virtual private network (VPN) map (e.g., Table 2 described in FIG. 2), wherein the VPN map includes first tenant (e.g., Tenant B, as seen in Table 2) and associated tenant VPN ID(s) and a second tenant (e.g., Tenant A, as seen in Table 2) and associated VPN ID(s). In some examples, the first tenant and the second tenant may have at least one overlapping VPN ID. For example, as shown in Table 2, Tenant A and Tenant B may both be associated with a "VPN 10."

According to some examples, the method includes generating, by the multi-tenant router, a unique local identifier for entries of the VPN map on the multi-tenant router, the local identifier being associated with respective tenant and VPN ID combinations at block 404. For example, the edge node 204 illustrated in FIG. 2 may generate a unique local identifier for entries of the VPN map on the multi-tenant router, the local identifier being associated with respective tenant and VPN ID combinations (e.g., Tenant B and VPN 10, Tenant A and VPN 10). The multi-tenant router my receive a traffic flow, where the traffic flow may include a destination and a source. In order to effectively implement zone-based firewall configurations associated with the network and/or tenant, the multi-tenant router may identify a zone associated with the destination and a zone associated with the source. The zone may be determined according to the local identifier associated with each the destination and the source. To generate the unique local identifier associated with the entries of the VPN map, the multi-tenant router may identify the unique local identifier using an associated VRF if the VPN is hosted on the multi-tenant router and/or the multi-tenant router may identify the unique local identifier using Overlay Management Protocol (OMP), route leaking, and/or another method of sharing data between nodes if the VPN is not hosted on the multi-tenant router.

According to some examples, the method includes looking up, by the multi-tenant router, the local identifier corresponding to the VRF of the destination of the traffic flow at block 410. For example, the edge node 204 illustrated in FIG. 2 may look up, by the multi-tenant router, the local identifier corresponding to the VRF of the destination of the traffic flow. In some examples, the multi-tenant router may receive an instruction to host a first virtual routing and forwarding instance for a particular tenant and VPN ID combination. The multi-tenant router may record the first VRF instance hosted by the multi-tenant router in the VPN map maintained by the multi-tenant router. If a VPN ID is hosted (e.g., configured on) on the multi-tenant router, then the multi-tenant router may store the corresponding local identifier locally in a location accessible by the multi-tenant router. The local identifier may be stored in associated with the VRF of the destination of the traffic flow. Therefore, upon receipt of a traffic flow, the multi-tenant router may identify the local identifier using the VRF. The multi-tenant router may learn the local identifier of the source and/or destination in this manner.

According to some examples, the method includes looking up, by the multi-tenant router, the local identifier corresponding to the combination of the VPN ID and tenant for the destination of the traffic flow at block 406. For example, the edge node 204 illustrated in FIG. 2 may look up, by the multi-tenant router, the local identifier corresponding to the combination of the VPN ID and tenant (e.g., Tenant B and VPN 10, Tenant A and VPN 10) for the destination of the traffic flow. In order to determine the local identifier, the multi-tenant router may look up the local identifier using data from neighboring nodes associated with the network if the VPN ID and tenant combination is not hosted on the multi-tenant router. The multi-tenant router may learn the local identifier using OMP, route leaking, gossip protocols, flooding, routing protocols, broadcasting, multicasting, peer-to-peer file sharing, cluster-based protocols, content delivery networks, data replication, publish-subscribe systems, service discovery protocols, any combination thereof, or the like. The multi-tenant router may learn the local identifier of the source and/or the destination in this manner.

According to some examples, the method includes mapping the local identifier to the destination zone, whereby the multi-tenant router can apply the zone-based firewall configuration for the determined VPN ID and tenant that maps to the local identifier at block 408. For example, edge node 204 illustrated in FIG. 2 may map the local identifier to the destination zone, whereby edge node 204 can apply the zone-based firewall configuration for the determined VPN ID and tenant that maps to the local identifier. The multi-tenant router may identify the local identifier associated with the source and/or the destination and then may determine a zone associated with the source and/or destination. The source zone and/or the destination zone may be associated with security protocols, firewalls, settings, any combination thereof, or the like. In some examples, the zones are configured in zone pairs (e.g., traffic from Source A to Destination B receives Security Protocol C).

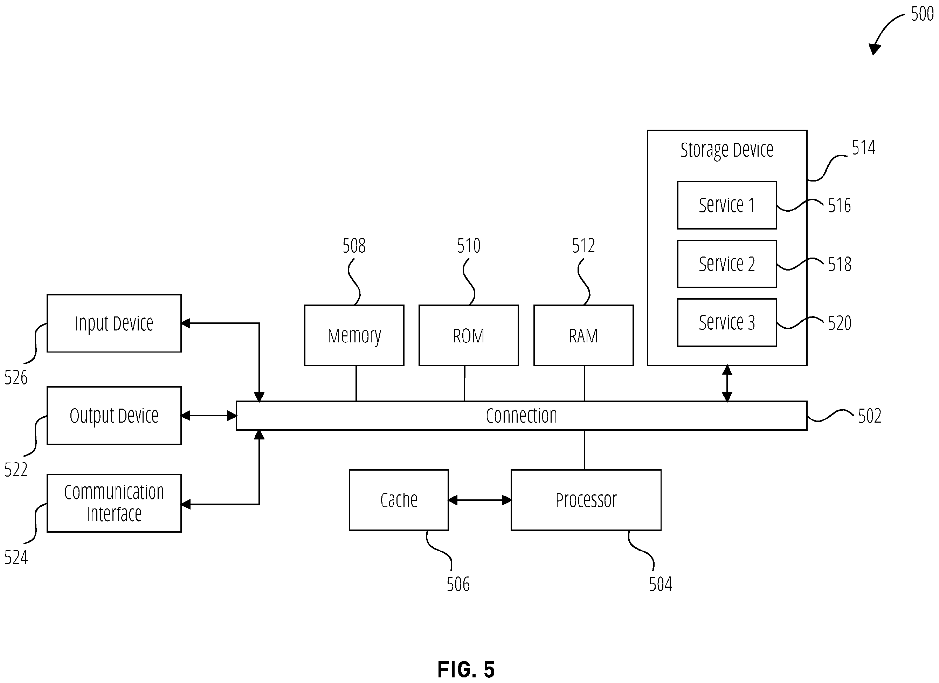

FIG. 5 shows an example of computing system 500, which can be for example any computing device making up the networking system of FIG. 1 and/or FIG. 2, or any component thereof in which the components of the system are in communication with each other using connection 502. Connection 502 can be a physical connection via a bus, or a direct connection into processor 504, such as in a chipset architecture. Connection 502 can also be a virtual connection, networked connection, or logical connection.

In some embodiments, computing system 500 is a distributed system in which the functions described in this disclosure can be distributed within a datacenter, multiple data centers, a peer network, etc. In some embodiments, one or more of the described system components represents many such components each performing some or all of the function for which the component is described. In some embodiments, the components can be physical or virtual devices.

Example computing system 500 includes at least one processing unit (CPU or processor) 504 and connection 502 that couples various system components including system memory 508, such as read-only memory (ROM) 510 and random access memory (RAM) 512 to processor 504. Computing system 500 can include a cache of high-speed memory 506 connected directly with, in close proximity to, or integrated as part of processor 504.

Processor 504 can include any general purpose processor and a hardware service or software service, such as services 516, 518, and 520 stored in storage device 514, configured to control processor 504 as well as a special-purpose processor where software instructions are incorporated into the actual processor design. Processor 504 may essentially be a completely self-contained computing system, containing multiple cores or processors, a bus, memory controller, cache, etc. A multi-core processor may be symmetric or asymmetric.

To enable user interaction, computing system 500 includes an input device 526, which can represent any number of input mechanisms, such as a microphone for speech, a touchsensitive screen for gesture or graphical input, keyboard, mouse, motion input, speech, etc. Computing system 500 can also include output device 522, which can be one or more of a number of output mechanisms known to those of skill in the art. In some instances, multimodal systems can enable a user to provide multiple types of input/output to communicate with computing system 500. Computing system 500 can include communication interface 524, which can generally govern and manage the user input and system output. There is no restriction on operating on any particular hardware arrangement, and therefore the basic features here may easily be substituted for improved hardware or firmware arrangements as they are developed.

Storage device 514 can be a non-volatile memory device and can be a hard disk or other types of computer readable media which can store data that are accessible by a computer, such as magnetic cassettes, flash memory cards, solid state memory devices, digital versatile disks, cartridges, random access memories (RAMs), read-only memory (ROM), and/or some combination of these devices.

The storage device 514 can include software services, servers, services, etc., that when the code that defines such software is executed by the processor 504, it causes the system to perform a function. In some embodiments, a hardware service that performs a particular function can include the software component stored in a computer-readable medium in connection with the necessary hardware components, such as processor 504, connection 502, output device 522, etc., to carry out the function.

In summary, in one embodiment, a method includes onboarding, by an edge router, a first tenant from a network management system and determining, by the edge router, a mapping of a tenant identifier associated with the first tenant to a controller identifier associated with a controller. The method also includes reserving, by the edge router, a port number in a kernel for the first tenant and inserting, by the edge router, the tenant identifier into a first control packet. The method further includes communicating, by the edge router, the first control packet to the controller via an encrypted control connection during a first peering session. The first peering session shares the encrypted control connection with a second peering session.

For clarity of explanation, in some instances, the present technology may be presented as including individual functional blocks including functional blocks comprising devices, device components, steps or routines in a method embodied in software, or combinations of hardware and software.

Any of the steps, operations, functions, or processes described herein may be performed or implemented by a combination of hardware and software services or services, alone or in combination with other devices. In some embodiments, a service can be software that resides in memory of a client device and/or one or more servers of a content management system and perform one or more functions when a processor executes the software associated with the service. In some embodiments, a service is a program or a collection of programs that carry out a specific function. In some embodiments, a service can be considered a server. The memory can be a non-transitory computer-readable medium.

In some embodiments, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer-readable media. Such instructions can comprise, for example, instructions and data which cause or otherwise configure a general purpose computer, special purpose computer, or special purpose processing device to perform a certain function or group of functions. Portions of computer resources used can be accessible over a network. The executable computer instructions may be, for example, binaries, intermediate format instructions such as assembly language, firmware, or source code. Examples of computer-readable media that may be used to store instructions, information used, and/or information created during methods according to described examples include magnetic or optical disks, solid-state memory devices, flash memory, USB devices provided with non-volatile memory, networked storage devices, and so on.

Devices implementing methods according to these disclosures can comprise hardware, firmware and/or software, and can take any of a variety of form factors. Typical examples of such form factors include servers, laptops, smartphones, small form factor personal computers, personal digital assistants, and so on. The functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. A computer implemented method for applying zone-based firewall configurations to traffic of multiple tenants connected through a single edge router, comprising:
maintaining, by a multi-tenant router, a virtual private network (VPN) map, wherein the VPN map includes first tenant and associated VPN ID(s) and a second tenant and associated VPN ID(s);
storing, by the multi-tenant router, at least a first zone-based firewall configuration for the first tenant and at least a second zone-based firewall configuration for the second tenant;
receiving, by the multi-tenant router, a traffic flow over a VPN, wherein the VPN is present in the VPN map;
determining, by the multi-tenant router, whether to apply the first zone-based firewall configuration or the second zone-based firewall configuration to the traffic flow depending on a combination of a VPN ID and tenant; and
applying, by the multi-tenant router, the zone-based firewall configuration for the determined VPN ID and tenant.

2. The computer implemented method of claim 1, wherein the first tenant and the second tenant have at least one overlapping VPN ID.

3. The computer implemented method of claim 1 or 2, wherein the multi-tenant router does not utilize containers or namespaces to isolate tenants.

4. The computer implemented method of any of claims 1 to 3, further comprising:
receiving, by the multi-tenant router, an instruction to host a first virtual routing and forwarding (VRF) instance for a particular tenant and VPN ID combination; and
recording, by the multi-tenant router, the first VRF instance hosted by the multi-tenant router in the VPN map maintained by the multi-tenant router.

5. The computer implemented method of any of claims 1 to 4, further comprising:
generating, by the multi-tenant router, a unique local identifier for entries of the VPN map on the multi-tenant router, the local identifier being associated with respective tenant and VPN ID combinations.

6. The computer implemented method of claim 5, wherein the determining whether to apply the first zone-based firewall configuration or the second zone-based firewall configuration to the traffic flow depending on the combination of the VPN ID and tenant further comprises:
looking up, by the multi-tenant router, the local identifier corresponding to the combination of the VPN ID and tenant for a destination of the traffic flow; and
mapping the local identifier to a destination zone, whereby the multi-tenant router can apply the zone-based firewall configuration for the determined VPN ID and tenant that maps to the local identifier; or
looking up, by the multi-tenant router, the local identifier corresponding to the combination of the VPN ID and tenant for a source of the traffic flow; and
mapping the local identifier to a source zone, whereby the multi-tenant router can apply the zone-based firewall configuration for the determined VPN ID and tenant that maps to the local identifier.

7. The computer implemented method of claim 5, wherein the determining whether to apply the first zone-based firewall configuration or the second zone-based firewall configuration to the traffic flow depending on the combination of the VPN ID and tenant further comprises:
looking up, by the multi-tenant router, the local identifier corresponding to a VRF instance of a destination of the traffic flow; and
mapping the local identifier to a destination zone, whereby the multi-tenant router can apply the zone-based firewall configuration for the determined VPN ID and tenant that maps to the local identifier; or
looking up, by the multi-tenant router, the local identifier corresponding to a VRF instance of a source of the traffic flow; and
mapping the local identifier to a source zone, whereby the multi-tenant router can apply the zone-based firewall configuration for the determined VPN ID and tenant that maps to the local identifier.

8. The computer implemented method of claim 5, further comprising:
learning, at the multi-tenant router, a second VRF instance associated with a tenant and VPN ID combination, wherein the second VRF is not hosted by the multi-tenant router;
assigning a second local identifier to the tenant and VPN ID combination; and
storing the tenant and VPN ID combination and the second local identifier for the second VRF in the VPN map on the multi-tenant router.

9. The computer implemented method of any of claims 1 to 8, wherein the first zone-based firewall configuration maps firewall policy to a traffic flow originating in a first source zone with a destination in a first destination zone.

10. The computer implemented method of any of claims 1 to 9, further comprising:
configuring each VPN ID with a traffic limit during onboarding based on one or more zone configurations, optionally wherein the traffic limit includes at least one of a maximum number of sessions or maximum number of half sessions.

11. The computer implemented method of any of claims 1 to 10, further comprising:
learning, through overlay routing protocol (OMP) via one or more other multi-tenant routers on the multi-tenant network, routing information aligning with empty entries that are not hosted by the multi-tenant router.

12. The computer implemented method of any of claims 1 to 11, wherein the multi-tenant router is associated with a network with a controller, wherein the controller is a software-defined wide area network (SDWAN) controller.

13. The computer implemented method of any of claims 1 to 12, wherein a zone configuration includes one or more zone pairs.

14. A multi-tenant router for applying zone-based firewall configurations to traffic of multiple tenants connected through a single edge router, comprising:
means for maintaining a virtual private network (VPN) map, wherein the VPN map includes first tenant and associated VPN ID(s) and a second tenant and associated VPN ID(s);
means for storing at least a first zone-based firewall configuration for the first tenant and at least a second zone-based firewall configuration for the second tenant;
means for receiving a traffic flow over a VPN, wherein the VPN is present in the VPN map;
means for determining whether to apply the first zone-based firewall configuration or the second zone-based firewall configuration to the traffic flow depending on a combination of a VPN ID and tenant; and
means for applying the zone-based firewall configuration for the determined VPN ID and tenant;
the router optionally further comprising means for implementing the method according to any of claims 2 to 13.

15. A computer program, computer program product or computer readable medium comprising instructions which, when executed by a computer, cause the computer to carry out the steps of the method of any of claims 1 to 13.
